# EUROPEAN PATENT APPLICATION

(11) **EP 1 835 456 A1**
(43) Date of publication of application: **19.09.2007**
(21) Application number: 06116029.7
(22) Date of filing: 26.06.2006
(51) Int. Cl.: G06T 1/00

(54) **Image authentication system, image authentication method, printed image, and computer product**

(30) Priority: 15.03.2006 JP 2006071789
(71) Applicant: FUJITSU LIMITED, Kawasaki-shi, Kanagawa 211-8588 (JP)
(72) Inventor: Chiba, Hirotaka c/o FUJITSU LIMITED, Kawasaki-shi Kanagawa 211-8588 (JP); Noda, Tsugio c/o FUJITSU LIMITED, Kawasaki-shi Kanagawa 211-8588 (JP)
(74) Representative: Kreutzer, Ulrich

(57) **Abstract**

In an image authentication system, a printing unit (10) prepares a code in a form of an image of a different density in any two adjacent blocks, and prints the code onto a recording medium as a printed image. A storage unit (20) stores therein image data corresponding to printed images and codes to be embedded in image data corresponding to the printed images in a correlated manner. An authenticating unit (30) receives scanned image data corresponding to a printed image, extracts a code embedded in the scanned image data and authenticates the printed image corresponding to the scanned image data based on extracted code.

## Description

### BACKGROUND OF THE INVENTION

### 1. Field of the Invention

The present invention generally relates to a technology for authenticating images printed on a recording medium and specifically relates to authenticating the images based on codes embedded in the images.

### 2. Description of the Related Art

The technology of embedding a code in an image and decoding the code to perform authentication has been known in the art. For example, an image processing apparatus disclosed in Japanese Patent Laid-Open Publication No. 2005-276561 describes a decoding process of an image printed or imprinted on a recording medium (hereinafter, "printed document"), after the code has been embedded into the image by the conventional code embedding technology, in which the image is output to a printed document or to a display device and then decoded upon receiving an image of the printed document from an input device such as a camera. The decoding process involves decoding the original code by the difference in the average densities of the adjoining blocks of the input image.

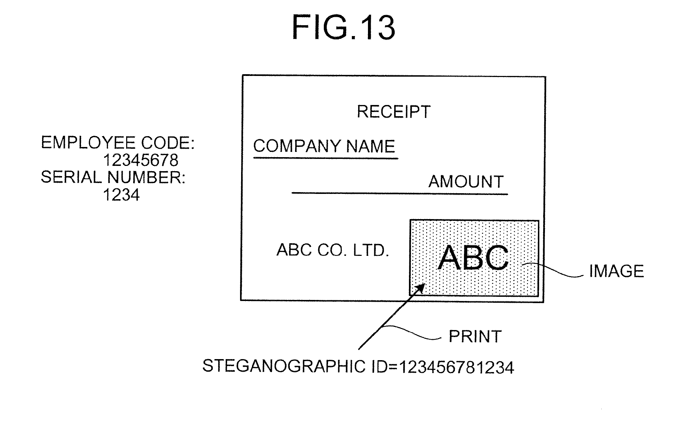

The conventional image processing apparatus described above performs authentication of the contents of the printed document in the following manner. If a receipt (as shown in Fig. 13) is presented as a document to be authenticated, the image processing apparatus embeds the data to be authenticated (for example, as shown in Fig. 13, data such as Employee Code and Serial No. for identifying a concerned person) as a code (for example, a steganographic identification (ID) shown in Fig. 13) into an image (for example, "ABC" shown in Fig. 13) imprinted in the receipt, and outputs the receipt along with the image imprinted in the receipt to a printed document. The image processing apparatus then decodes the image of the printed document, restores the steganographic ID, and authenticates the printed document based on the restored contents of steganographic ID.

For example, the image "ABC" imprinted in the receipt has the Employee Code 12345678 and the Serial No. 1234 embedded into it. An image of the entire receipt including the image ABC is output to a printed document. The image imprinted in the printed document is decoded to restore the steganographic ID into Employee Code and Serial No., and the printed document is authenticated based on the Employee Code and Serial No.

However, the disadvantage of the conventional technology is that only limited amount of data can be embedded in the code, enabling the image of the printed document to be authenticated if less content is involved, but not if the content involved is large. That is, in the example presented above, the Employee Code and the Serial No. can be embedded as a steganographic ID. However, the employee or company name and the amount cannot be embedded, and hence the contents of the receipt cannot be authenticated.

### SUMMARY OF THE INVENTION

It is an object of the present invention to at least partially solve the problems in the conventional technology.

According to an aspect of the present invention, an image authentication system includes a printing unit that prepares a code in a form of an image of a different density in any two adjacent blocks, and prints the code onto a recording medium as a printed image; a storage unit that stores therein image data corresponding to printed images and codes to be embedded in image data corresponding to the printed images in a correlated manner; and an authenticating unit that receives scanned image data corresponding to a printed image, extracts a code embedded in the scanned image data and authenticates the printed image corresponding to the scanned image data based on extracted code.

According to another aspect of the present invention, a printed image is printed by the printing unit of the above image authentication system.

According to still another aspect of the present invention, an image authentication method includes preparing a code in a form of an image of a different density in any two adjacent blocks; printing prepared code onto a recording medium as a printed image; storing image data corresponding to printed images and codes to be embedded in image data corresponding to the printed images in a correlated manner in a storage unit; and receiving scanned image data corresponding to a printed image; extracting a code embedded in the scanned image data; and authenticating the printed image corresponding to the scanned image data based on extracted code.

According to still another aspect of the present invention, a computer-readable recording medium stores therein a computer program that causes a computer to implement the above image authentication method.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic for explaining an encoding process according to a first embodiment of the present invention;
Fig. 2 is an image with a code embedded therein;
Fig. 3 is a schematic for explaining the overview and a characteristic feature of an image authentication system according to the first embodiment;
Fig. 4 is a schematic for explaining an authentication process performed by the image authentication system according to the first embodiment;
Fig. 5 is a block diagram of an image processing apparatus according to the first embodiment;
Fig. 6 is an original image data;
Fig. 7 is a schematic for explaining an image data having a steganographic ID is embedded therein;
Fig. 8 is a block diagram of a steganographic-ID management server according to the first embodiment;
Fig. 9 is a block diagram of a scanner according to the first embodiment;
Fig. 10 is a flowchart of the process performed by the image authentication system according to the first embodiment;
Fig. 11 is a schematic for explaining an image authentication system according to a second embodiment of the present invention;
Fig. 12 is a schematic of a computer that implements the methods according to the first and the second embodiments; and
Fig. 13 is a schematic for explaining a conventional image authentication process.

### DETAILED DESCRIPTION OF THE PREFERRED EMBODIMENTS

Exemplary embodiments of the present invention are explained next with reference to the accompanying drawings.

Important terms used in a first embodiment are explained first, followed by an overview and characteristic feature of the image authentication system according to the first embodiment, a configuration of an image processing apparatus, a steganographic ID managing server, a process flow of an image authentication process, and finally the effects due to the first embodiment.

The term Steganographic ID used below refers to an image of a different density in the form of a code, and which is imperceptible to the human eye, embedded between adjoining blocks.

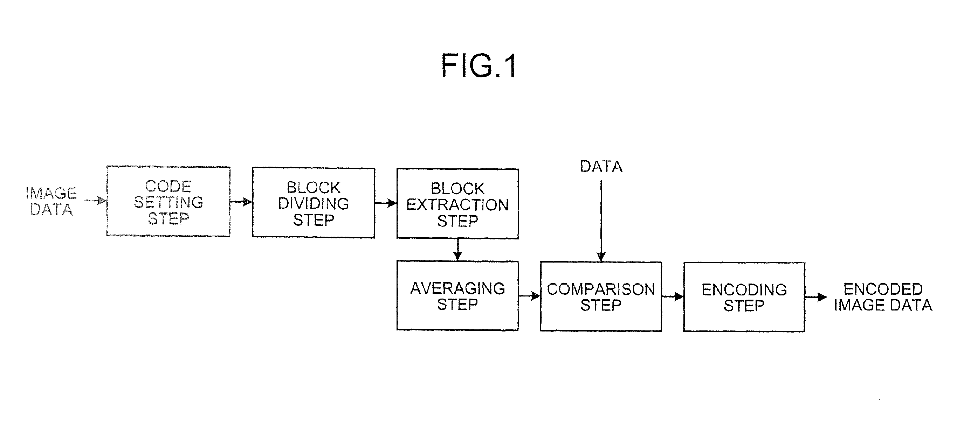

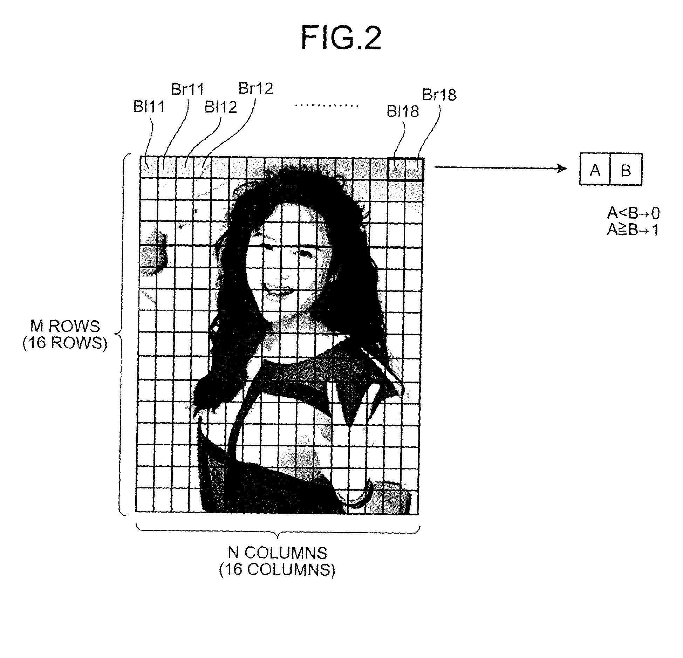

A process performed by an image processing apparatus 10" according to an embodiment of the present invention when embedding a steganographic ID in image data is explained next with reference to Fig. 1 and Fig. 2. Fig. 1 is a schematic of the encoding process. Fig. 2 is a drawing of an image in which a code has been embedded.

As shown in Fig. 1, the encoding process performed by the image processing apparatus 10 includes setting a code, for example, a 16-bit code "1010110101001010", to be embedded into an original image (code setting step), dividing the original image data into blocks of M rows x N columns, and outputting the resultant data as image data after division (block dividing step). In the next step, the image processing apparatus 10 regards two adjacent blocks of the image data after division as a pair and extracts a density distribution of each block as block density data (block extraction step).

An image processing apparatus 10 then determines an average density of each block based on the block density data (averaging step shown). Next, the image processing apparatus 10 compares a magnitude relation of characteristic amount (for example, the average densities, granularity, chroma, density concentration or dispersion) of the blocks regarded as a pair (comparison step).

Next, the image processing apparatus 10 performs a process of embedding a code C in the image data after division based on the result of comparison done at the previous comparison step (encoding step). Specifically, the image processing apparatus 10 determines whether the magnitude relation of the each pair of blocks coincides with the code to be embedded, and if the magnitude relation of the pair of blocks coincides with the code, maintains the magnitude relation of the characteristic amount.

On the other hand, if the magnitude relation of the pair of blocks does not coincide with the code, the image processing apparatus recalculates the characteristic amount of the block having a smaller characteristic amount of the pair of blocks by adding a predetermined amount to its average value while recalculating the characteristic amount of the block having a larger characteristic amount of the pair of block by subtracting the predetermined amount from its average value, and outputs an image data with recalculated characteristic amounts of the two blocks regarded as a pair.

The encoding process is explained in greater detail with reference to Fig. 2. After setting a code to be embedded in the original image, the original image data is divided into the image data after division having M rows x N columns (16x16 in the example shown in Fig. 2). An image data after division I1 shown in Fig. 2 includes 256 blocks (16x16 shown in Fig. 2), having blocks BI11, Br11, , Bl18, Br18, Bl21, Br21, Bl168, B4168. One block is of 64x64 pixels. The original image data is formed in a predetermined format (Joint Photographic Experts Group (JPEG), Graphics Interchange Format (GIF), etc.).

Next, the image processing apparatus 10 regards two adjoining blocks as a pair (for example, block Bl11 and block Br11), and extracts density distribution of the pair of blocks Bl11 and Br11 as block density data.

The image processing apparatus 10 then determines the left side average density data corresponding to the block Bl11 and the right side average density data corresponding to the block Br11 from the block density data. The image processing apparatus then compares n-th bit (where n= 1, 2, , 16) from the leftmost bit shown in Fig. 2) of the code with the bit determination result determined from the magnitude relation of the left side average density data and the right side average density data, and performs the process of embedding the code in the image data after division (original image data) based on the comparison result.

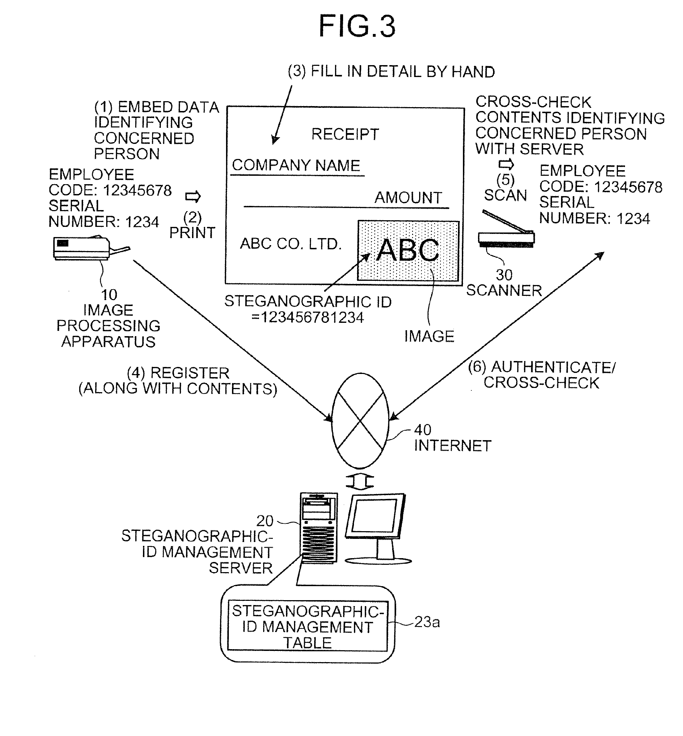

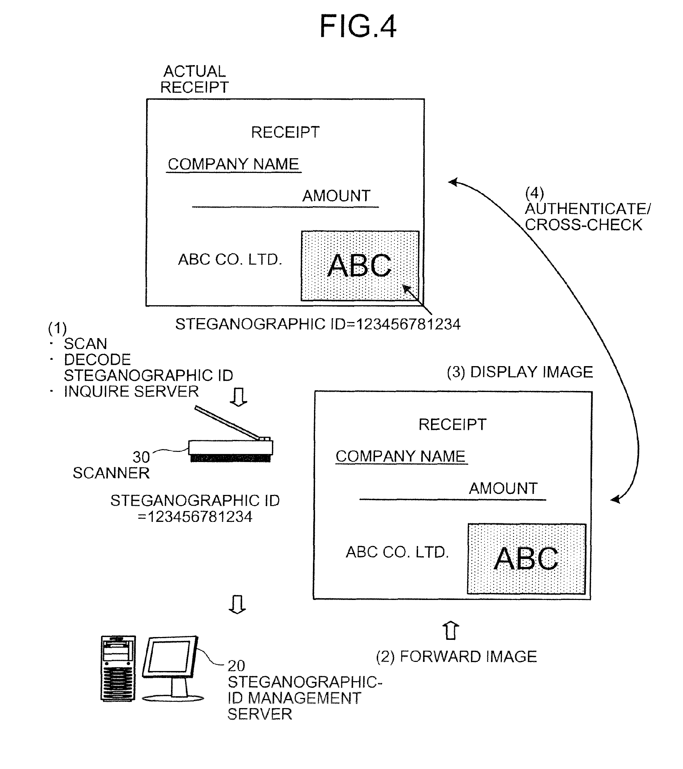

The overview and the characteristic feature of the image authentication system according to the first embodiment are explained with reference to Fig. 3 and Fig. 4. Fig. 3 is a schematic for explaining the overview and the characteristic feature of the image authentication system according to the first embodiment. Fig. 4 is a schematic for explaining an authentication process performed by the image authentication system according to the first embodiment.

An overview of authentication of an image embedded in a printed document is presented in the image authentication system according to the first embodiment. The main characteristic feature of the image authentication system according to the first embodiment is that authentication of the image imprinted in the printed document can be carried out regardless of the image content in the printed document.

The main characteristic feature of the image authentication system according to the first embodiment is explained next. An image authentication system 1 according to first embodiment includes the image processing apparatus 10, a steganographic-ID management server 20 and a scanner 30. The image processing apparatus 10 embeds a steganographic ID (see (1) of Fig. 3) in the image (the image embedded in the receipt, shown in Fig. 3) by the encoding process described above, and outputs the image data on a printed document (see (2) of Fig. 3). Specifically, the image processing apparatus 10 embeds data identifying a concerned person (Employee Code 12345678 and Serial No 1234 shown in Fig. 3) as steganographic ID into the image (the image imprinted in the receipt in Fig. 3) data and outputs the image to a printed document. After the details have been filled in by hand in the receipt (see (3) of Fig. 3), and receipt with the handwritten data is presented to the image processing apparatus 10 once again, the image processing apparatus 10 reads the entire image including the handwritten section, and forwards it to the steganographic-ID management server 20 with a request to register the image of the printed document.

Upon receiving the request, the steganographic-ID management server 20 extracts the steganographic ID from the image of the printed document, and registers the steganographic ID and the image of the entire printed document in a correlated form in a steganographic-ID management table 23a (see (4) of Fig. 3). The scanner 30 receives the actual printed document, scans the image data of the actual printed document, extracts the steganographic ID ("123456781234" in Fig. 4) from the image portion with the steganographic ID embedded therein (see (5) of Fig. 3), and forwards the extracted steganographic ID to the steganographic-ID management server 20. The steganographic-ID management server 20 reads from the steganographic-ID management table 23a the image data of the printed document corresponding to the steganographic ID received from the scanner 30 and authenticates the image data by cross-checking it against the image data of the printed document read from the steganographic-ID management table 23a (see (6) of Fig. 3).

The processes (5) and (6) in Fig. 3 are explained in further detail with reference to Fig. 4. After reading the image data from the printed document (the actual receipt in Fig. 4), the scanner 30 extracts the steganographic ID ("123456781234" in Fig. 4) from the image data of the actual printed document, and forwards the steganographic ID to the steganographic-ID management server 20 (see (1) of Fig. 4). Upon receiving the steganographic ID, the steganographic-ID management server 20 reads the image data of the printed document corresponding to the steganographic ID from the steganographic-ID management table 23a, and forwards the image data of the printed document to the scanner 30 (see (2) of Fig. 4). The scanner 30 receives and displays the image data of the printed document so that the actual printed document and the image data of the printed document can be visually compared to determine whether they match (see (3) of Fig. 4). If the actual printed document and the image data of the printed document match, the actual receipt is authenticated as being genuine. Otherwise, the actual receipt is regarded as a counterfeit (see (4) of Fig. 4).

Thus, in the image authentication system 1, the printed document is output with an image of a different density in the form of a steganographic ID is embedded between adjoining blocks. The steganographic ID embedded in the image imprinted in the printed document and the image of the printed document are registered in a correlated form. The image imprinted in the printed document is authenticated by extracting the steganographic ID embedded in the image. Consequently, the image imprinted in the printed document can be authenticated regardless of the image content in the printed document.

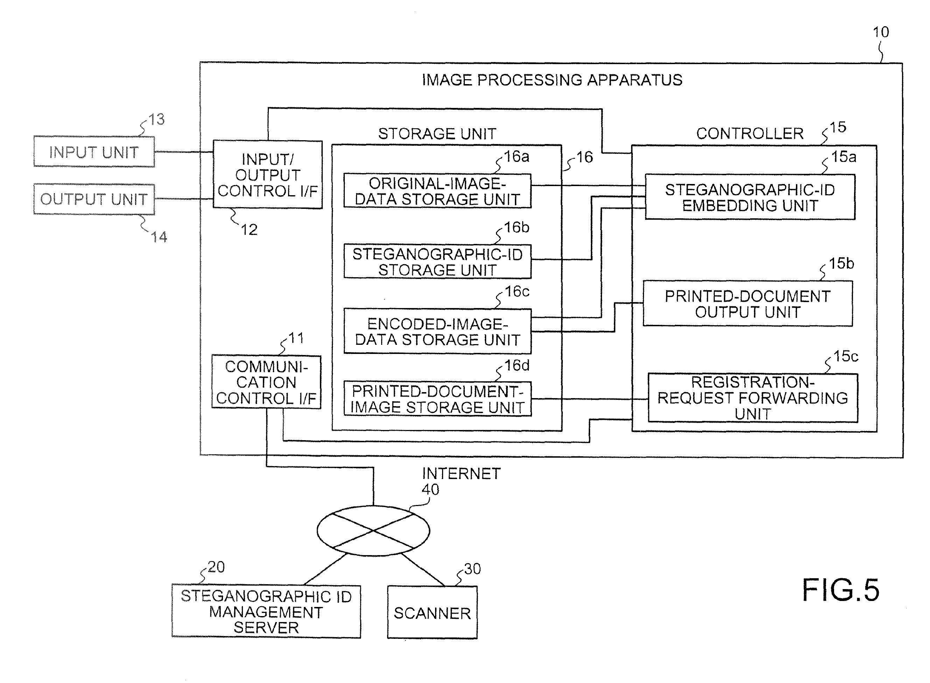

The configuration of the image processing apparatus 10 is explained next with reference to Fig. 5. Fig. 5 is a block diagram of the image processing apparatus 10. The image processing apparatus 10 includes a communication control I/F 11, an input/output control I/F 12, an input unit 13, an output unit 14, a controller 15, and a storage unit 16. The image processing apparatus 10 is connected to the steganographic-ID management server 20 and the scanner 30 via a network 40. The function of each part of the image processing apparatus 10 is explained next.

The communication control I/F 11 controls the communication related to exchange of various types of data between the image processing apparatus 10 and the steganographic-ID management server 20. Specifically, the communication control I/F 11 forwards the contents of the printed document to the steganographic-ID management server 20.

The input/output control I/F 12 controls the data transfer between the input unit 13 and the output unit 14, the controller 15, and the storage unit 16.

The input unit 13 inputs the original image data, the steganographic ID, and the image of the printed document. Specifically, the input unit 13 inputs the original image data formed in a predetermined format (such as Joint Photographic Experts Group (JPEG), Graphics Interchange Format (GIF), etc.) by a scanner, a storage medium or communication, the steganographic ID composed of 16 bits, such as "1010110101001010" by a keyboard, and the image of the printed document by the scanner, the storage medium or communication, after details (such as "Company name" and "Amount" shown in Fig. 3) have been filled in by hand in the printed document output by a printed-document output unit 15b. The printed-document output unit 15b is described in a later section.

The output unit 14 outputs the image data having information (such as the steganographic ID) embedded therein to the printed document. That is, the output unit 14 outputs the image data encoded with the 16-bit steganographic ID "1010110101001010" stored in an encoded-image-data storage unit 16c to the printed document. The encoded-image-data storage unit 16c is explained in a later section.

The storage unit 16 contains data and computer programs required by the controller 15 for various processes. The storage unit 16 includes an original-image-data storage unit 16a, a steganographic-ID storage unit 16b, the encoded-image-data storage unit 16c, and a printed-document-image storage unit 16d.

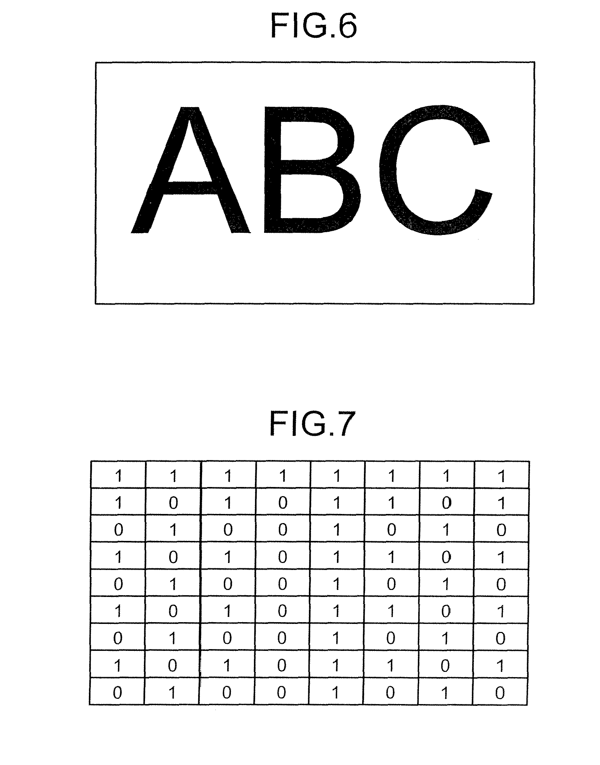

The original-image-data storage unit 16a stores therein the original image data in which a code is to embedded by the image processing apparatus 10. Specifically, the original-image-data storage unit 16a the original image data shown in Fig. 6, formed in a predetermined format (such as Joint Photographic Experts Group (JPEG), Graphics Interchange Format (GIF), etc.).

The steganagraphic-ID storage unit 16b stores therein the steganographic ID to be embedded into the original image data. For example, the steganographic-ID storage unit 16b stores therein the Employee Code (for example, "12345678" shown in Fig. 3) assigned to each employee, and the Serial No. ("1234" shown in Fig. 3), which increments with every printed document output by the printed-document output unit 15b described later.

The encoded-image-data storage unit 16c stores therein the image data with the steganographic ID embedded therein. In other words, the encoded-image-data storage unit 16c stores therein the image data after the steganographic ID is embedded into it by a steganographic-ID embedding unit 15a described later. Specifically, the encoded image data has embedded into it the 16-bit steganographic ID, such as "1010110101001010", in a repeating manner, as shown in Fig. 7.

The printed-document-image storage unit 16d stores therein the image of the printed document. That is, the printed-document-image storage unit 16d stores therein the image of the printed document after details (such as "Company name" and "Amount") have been filled in by hand in the printed document output by the printed-document output unit 15b.

The controller 15 executes various processes and includes an internal memory for storing programs and necessary data required for regulating the various processes. In close relevance to the present invention, the controller 15 includes the steganographic-ID embedding unit 15a, the printed-document output unit 15b, and a registration-request forwarding unit 15c. The printed-document output unit 15b substantially corresponds to an output unit in the claims.

The steganographic-ID embedding unit 15a embeds the steganographic ID into the original image data. Specifically, the steganographic-ID embedding unit 15a converts the Employee Code and the Serial No. stored in the steganographic-ID storage unit 16b" from a decimal number to a binary number and embeds the binary number as steganographic ID in the original image data stored in the original-image-data storage unit 16a, and stores the encoded image data in the encoded-image-data storage unit 16c.

The printed-document output unit 15b outputs the encoded image data to the printed document. Specifically, the printed-document output unit 15b outputs the image data stored in the encoded-image-data storage unit 16c to the printed document.

The registration-request forwarding unit 15c forwards a request to the steganographic-ID management server 20 to register the image of the printed document and the steganographic ID embedded in the image imprinted in the printed document in a correlated form. Specifically, the registration-request forwarding unit 15c reads and forwards the entire image including the handwritten section to the steganographic-ID management server 20 with the request for registration.

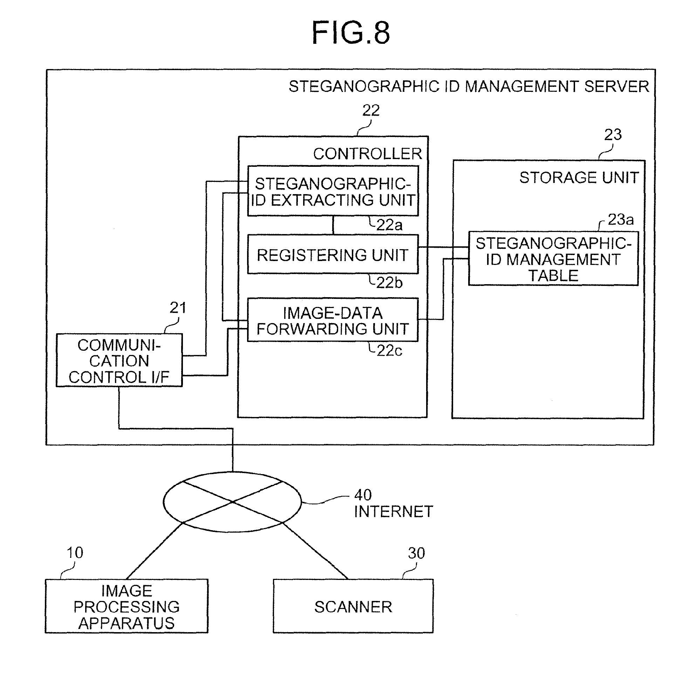

The configuration of the steganographic-ID management server 20 is explained next with reference to Fig. 8. Fig. 8 is a block diagram of the steganographic-ID management server 20. The steganographic-ID management server 20 includes a communication control I/F 21, a controller 22, and a storage unit 23. The steganographic-ID management server 20 is connected to the image processing apparatus 10 and the scanner 30 via the network 40. The function of each part of the steganographic-ID management server 20 is explained next.

The communication control I/F 21 controls communication related to the exchange of various types of data between the steganographic-ID management server 20 and the image processing apparatus 10 as well as the scanner 30. Specifically, the communication control I/F 21 receives the contents of the printed document from the image processing apparatus 10 and steganographic ID from the scanner 30.

The storage unit 23 stores therein data and computer programs required by the controller 22 for various processes. The storage unit 23 includes the steganographic-ID management table 23a.

The steganographic-ID management table 23a stores therein the image of the printed document and the steganographic ID embedded in the image imprinted in the printed document in a correlated form. Specifically, the steganagraphic-ID management table 23a stores the image of the printed document received from the image processing apparatus 10 and the steganographic ID embedded in the image imprinted in the printed document.

The controller 22 executes various processes and includes an internal memory for storing computer programs and necessary data required for regulating the various processes. The controller 22 includes a steganographic-ID extracting unit 22a a registering unit 22b, and an image-data forwarding unit 22c. The registering unit 22b substantially corresponds to a registering unit in the claims.

The steganographic-ID extracting unit 22a extracts the steganographic ID embedded in the image. Specifically, the steganographic-ID extracting unit 22a extracts the steganographic ID embedded in the image of the printed document received from the image processing apparatus 10 and outputs the extracted steganographic ID to the registering unit 22b.

The registering unit 22b registers the of the printed document and the steganographic ID imprinted in the image imprinted in the printed document in a correlated form. Specifically, the registering unit 22b registers the received image of the printed document and the steganographic ID extracted by the steganographic-ID extracting unit 22a from the steganographic-ID management table 23a in a correlated form.

The image-data forwarding unit 22c forwards the image data to the scanner 30. Specifically, after the steganographic ID is received, the image-data forwarding unit 22c reads the image data of the printed document corresponding to the steganographic ID from the steganographic-ID management table 23a, and forwards the read image of the printed document to the scanner 30.

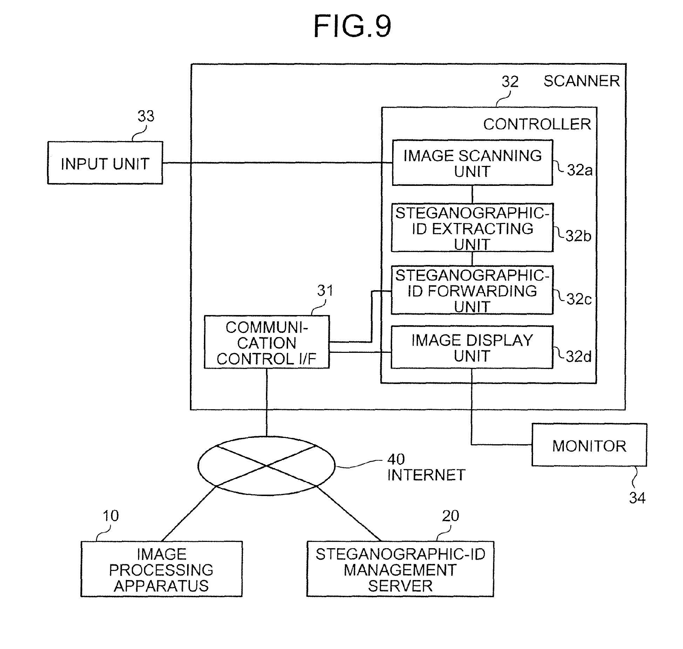

The configuration of the scanner 30 is explained next with reference to Fig. 9. Fig. 9 is a block diagram of the scanner 30. The scanner 30 includes a communication control I/F 31, a controller 32, an input unit 33, and a monitor 34, and is connected to the image processing apparatus 10 and the steganographic-ID management server 20 via the network 40. The function of each part of the scanner 30 is explained next.

The communication control I/F 31 controls communication related to the exchange of various types of data between the scanner 30 and the steganographic-ID management server 20. Specifically, the communication control I/F 31 forwards the steganographic ID to the steganographic-ID management server 20 and receives the image data of the printed document from the steganographic-ID management server 20.

The input unit 33 inputs the printed document. Specifically, the input unit 33 receives and inputs the actual printed document and inputs into an image scanning unit 32a described later. The monitor 34 displays the image data. Specifically, the monitor 34 displays the image data forwarded by the steganographic-ID management server 20 and received by an image display unit 32d described later.

The controller 32 executes various processes and includes an internal memory for storing programs and necessary data required for regulating the various processes. In close relevance to the present invention, the controller 32 includes the image scanning unit 32a, a steganographic-ID extracting unit 32b, a steganographic-ID forwarding unit 32c, and the image display unit 32d. The image display unit 32d substantially corresponds to an authenticating unit in the claims.

The image scanning unit 32a reads the image data from the printed document. Specifically, the image scanning unit 32a reads image data from the printed document (for example, the actual receipt) input by the input unit 33, and forwards the read image data to the steganographic-ID extracting unit 32b.

The steganographic-ID extracting unit 32b extracts the steganographic ID from the image data. Specifically, the steganographic-ID extracting unit 32b performs a decoding process on the image data received from the image scanning unit 32a to extract the steganographic ID, and outputs the extracted steganographic ID to the steganographic-ID forwarding unit 32c.

The steganographic-ID forwarding unit 32c forwards the steganographic ID to the steganographic-ID management server 20. Specifically, the steganographic-ID forwarding unit 32c forwards the steganographic ID received from the steganographic-ID extracting unit 32b to the steganographic-ID management server 20.

The image display unit 32d displays the image data of the printed document. Specifically, the image display unit 32d displays the image data received from the steganographic-ID management server 20 on the monitor 34, and enables the actual receipt and the image data of the printed document displayed on the monitor to be visually compared to determine whether they match. If the actual printed document and the image data of the printed document match, the actual receipt is authenticated as being genuine. Otherwise, the actual receipt is regarded as a counterfeit.

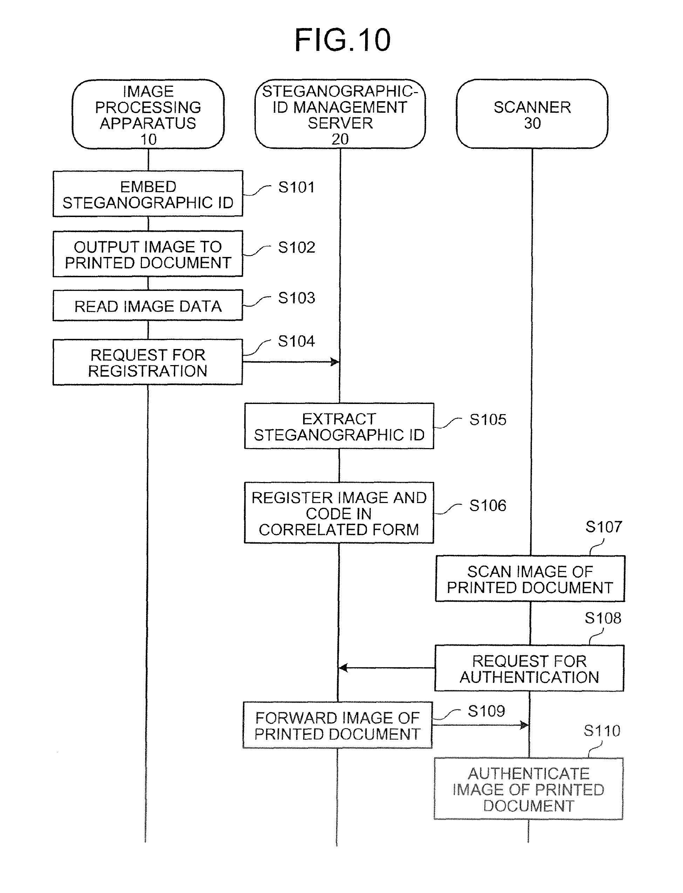

The processes performed by each of the units of the image authentication system 1 are explained next with reference to Fig. 10. Fig. 10 is a flowchart of the processes performed by each of the units of the image authentication system 1.

The image processing apparatus 10 of the image authentication system 1 converts the Employee Code and the Serial No. stored in the steganographic-ID storage unit 16b from decimal number to binary number and embeds the converted binary code in the original image data stored in the original-image-data storage unit 16a (step S101), and outputs the encoded image data to the printed document (step S102).

Once other details in the receipt are filled in by hand and the receipt along with the handwritten section is presented again, the image processing apparatus 10 reads the image of the entire receipt including the handwritten section (step S103), and forwards the entire image to the steganographic-ID management server 20 with a request for registration (step S104).

The steganographic-ID management server 20 extracts the steganographic ID embedded in the image of the printed document received from the image processing apparatus 10 (step S105), and registers the extracted steganographic ID and the image of the received printed document in a correlated form (step S106). The scanner 30 receives the actual printed document, scans the image data from the actual printed document (step S107), extracts the steganographic ID embedded in the image section, and forwards the extracted steganographic ID to the steganographic-ID management server 20 with a request for authentication (step S108).

Upon receiving the steganographic ID, the steganographic-ID management server 20 reads the image data of the printed document corresponding to the received steganographic ID from the steganographic-ID management table 23a, and forwards the read image of the printed document to the scanner 30 (step S109).

The scanner 30 displays the image data of the printed document received from the steganographic-ID management server 20 and enables image data of the printed document to be compared with the actual receipt. If the image imprinted in the actual receipt and the image data of the printed document match, the actual receipt is authenticated as genuine. Otherwise, the actual receipt is regarded as a counterfeit (step S110).

Thus, the printed document is output with an image of a different density in the form of a steganographic ID is embedded between adjoining blocks. The steganographic ID embedded in the image imprinted in the printed document and the image of the printed document are registered in a correlated form in the steganographic-ID management table 23a. The image imprinted in the printed document is authenticated by extracting the steganographic ID embedded in the image. Consequently, the image imprinted in the printed document can be authenticated regardless of the image content in the printed document.

Further, according to the first embodiment, the printed document is output with only the steganographic ID imprinted therein, and the printed document with the image containing the steganographic ID is received, and the image of the printed document and the steganographic ID are registered in the steganographic-ID management table 23a in a correlated form. Thus, the process of embedding the code in the image data during registration can be done away with.

According to the first embodiment, the steganographic ID imprinted in the printed document is extracted, and the image in the steganographic-ID management table 23a corresponding to the extracted steganographic ID is displayed on the monitor 34.

The other embodiments of the present invention are described collectively as a second embodiment.

### (1) Registration

In the first embodiment, the image data is output to a printed document followed by the registration of the contents of the printed document and steganographic ID in a correlated form. The registration of the image data that is output and the steganographic ID embedded in the image data can be registered in a correlated form at the same time the image data is output to a printed document.

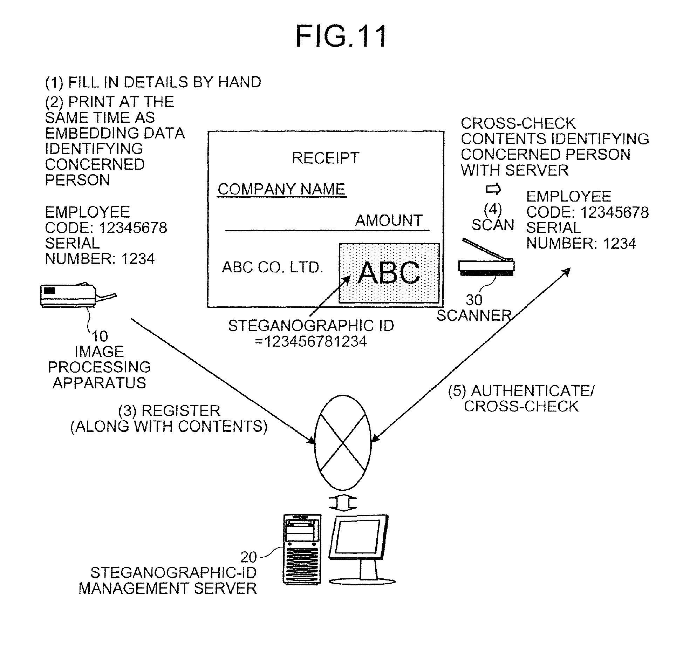

Specifically, as shown in Fig. 11, once the details (for example, "Company name", and "Amount") filled in by hand in the receipt ((1) of Fig. 11), the image processing apparatus 10 creates an image data that includes the handwritten text as well as the steganographic ID at the same time as embedding the data identifying the concerned person (for example, the Employee code "12345678" and the Serial No. "1234" shown in Fig. Fig. 11) as the steganographic ID in the image data of the receipt (see (2) of Fig. 11). At the same time as outputting the image data to the printed document, the image processing apparatus 10 forwards the entire image data to the steganographic-ID management server 20, with a request for registration (see (3) of Fig. 11).

Thus, the steganographic ID is embedded in the image to be imprinted in the printed document, and image with the steganographic ID embedded therein is output to a printed document followed by registration of the output image and the steganographic ID embedded in the image imprinted in the printed document in a correlated form in the steganographic-ID management table. Thus, embedding the steganographic ID in the image data just before registering the image data and the steganographic ID in a correlated form enables prevention of any potential tampering with the steganographic ID, thus enhancing the reliability of the steganographic ID.

### (2) Authentication

In the first embodiment, the image data corresponding to the steganographic ID embedded in the actual printed document is displayed, thus making it possible to authenticate by visual comparison of the actual printed document and the displayed image data of the printed document to determine if they match. However, authentication can also be implemented by identifying whether the actual printed document has a steganographic code embedded therein.

Specifically, extraction of steganographic ID can be carried out from the printed document to be authenticated, and if the steganographic ID is extractable, the printed document can be regarded genuine, otherwise, as a counterfeit.

Thus, by identifying a printed document as a counterfeit based on the inability to extract the steganographic ID from the printed document, the trouble involved in authentication by visual comparison can be done away with and authentication can be performed easily as the image imprinted in the printed document having the steganographic ID embedded therein is authenticated automatically.

### (3) Permissible ID

In the first embodiment, the image data corresponding to the steganographic ID of the actual printed document is displayed and the actual printed document and the displayed image data of the printed document are visually compared to determine whether they match. However, authentication can be carried out by storing a permissible ID, and determining whether the steganographic ID embedded in the image imprinted in the printed document to be authenticated matches the provided permissible ID.

Specifically, the steganographic-ID management server can further include a permissible ID storage unit that stores therein a permissible ID. Authentication can be carried out by extracting the steganographic ID embedded in the image imprinted in the printed document to be authenticated and determining whether the extracted steganographic ID matches the permissible ID stored in the permissible ID storage unit. If the extracted ID matches the permissible ID stored in the permissible ID storage unit, the printed document can be regarded as genuine, otherwise, as a counterfeit.

Thus, by including a permissible ID storage unit that authenticates the steganographic ID as genuine is further included in the steganographic-ID management server, and performing authentication by extracting the steganographic ID imprinted in the printed document and determining whether the extracted steganographic ID matches the steganographic ID stored in the permissible ID storage unit, the image not containing the preset permissible ID are automatically rejected. As a result, the preset steganographic ID can be changed at will, making it possible to perform a more appropriate authentication.

### (4) System configuration.

The constituent elements of each apparatus illustrated are merely conceptual and may not necessarily physically resemble the structures shown in the drawings. For instance, the apparatus need not necessarily have the structure that is illustrated. Each apparatus as a whole or in parts can be broken down or integrated either functionally or physically in accordance with the load or how the apparatus is to be used. For example, the image processing apparatus 10 and the steganographic-ID management server 20 can be integrated as a single entity. Further, the process functions performed by each apparatus are entirely or partially realized by the CPU or a program executed by the CPU or by a hardware using wired logic.

All the automatic processes explained in the present embodiment can be, entirely or in part, carried out manually. Similarly, all the manual processes explained in the present embodiment can be entirely or in part carried out automatically by a known method. The process procedures, the control procedures, specific names, and data, including various parameters, can be changed as required unless otherwise specified.

### (5) Computer Programs

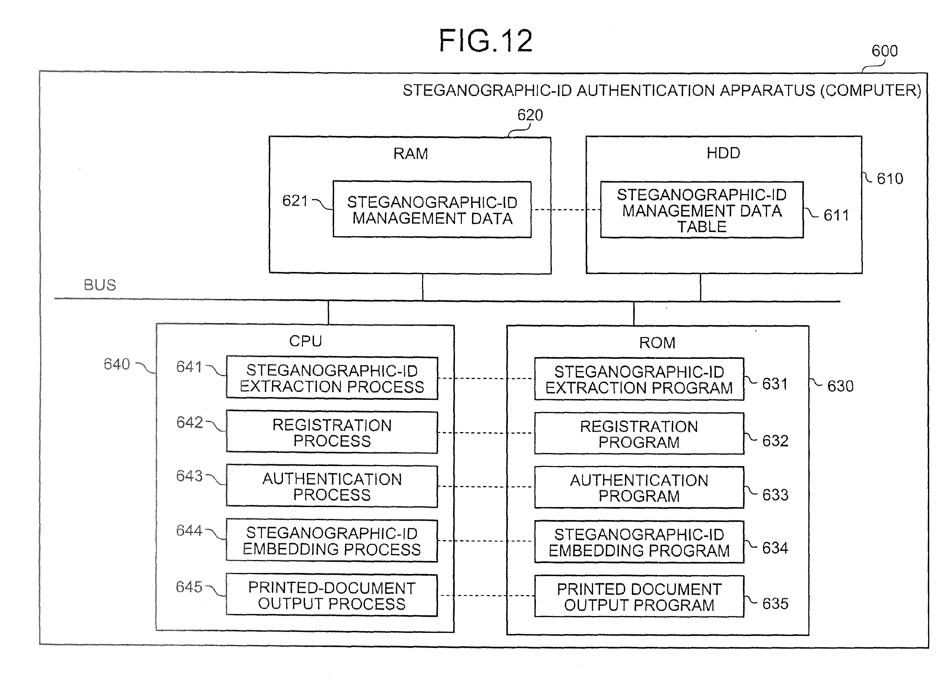

Some or all of the processes, methods, or steps explained above can be realized by having a computer such as a personal computer execute a ready computer program. An example of a computer that implements the program accomplishing the function described in the present embodiment is explained with reference to Fig. 12. Fig. 12 is a block diagram of a computer that implements an image authentication program.

A computer 600 that functions as a steganographic-ID authentication apparatus includes a hard disk drive (HDD) 610, a random access memory (RAM) 620, a read-only memory (ROM) 630, and a central processing unit (CPU) 640, all of which are connected to a bus 650.

The ROM 630 contains ready computer programs that accomplish the functions of the steganographic-ID authentication apparatus 600. That is, as shown in Fig. 11, the ROM 630 contains a steganographic-ID extraction program 631, a registration program 632, an authentication program 633, a steganographic-ID embedding program 634, and a printed-document output program 635. The programs 631 to 635 can be separate programs or can be integrated.

The CPU 640 loads and executes the programs 631 to 635 and, as shown in Fig. 12, performs a steganographic-ID extraction process 641, a registration process 642, an authentication process 643, a steganographic-ID embedding process 644, and a printed-document output process 645, respectively. The processes 641 to 645 correspond to the steganographic-ID extracting unit 22a, the registering unit 22b, the image display unit 32d, the steganographic-ID embedding unit 15a, and the printed-document output unit 15b, respectively.

As shown in Fig. 12, The HDD 610 contains a steganographic-ID management data table 611. The steganographic-ID management data table 611 corresponds to the steganographic-ID management table 23a. The CPU 640 registers data in the steganographic-ID management data table 611 as well as loads steganographic-ID management data 621 from the steganographic-ID management data table 611 to the RAM 620, and performs management of the steganographic ID based on the steganographic-ID management data 621 stored in the RAM 620.

According to an aspect of the present invention, a printed document is output after an image of a different density in the form of a code is embedded in two adjoining blocks. The code embedded in the printed document and the image imprinted in the printed document are registered in an image code storage unit. The code embedded in the printed document extracted and the image imprinted in the printed document is authenticated based on the extracted code. Consequently, the image imprinted in the printed document can be authenticated regardless of the image content in the printed document.

According to another aspect of the present invention, the printed document is output after embedding only the code. Upon receipt of the printed document with the image imprinted therein, the code and the image imprinted in the printed document are registered in a correlated form in the image code storage unit. Consequently, the process of embedding the code in the image data during registration can be done away with.

According to still another aspect of the present invention, the code is embedded in the image to be imprinted in the printed document and the printed document is output after the image with the code embedded therein is imprinted in the printed document. The output image and the code embedded in the image are registered in a correlated form in the image code storage unit. Consequently, by embedding the code in the image data just before registering the entire image data and the code in a correlated form enable prevention of any potential tampering with the code, thus enhancing the reliability of the code.

According to still another aspect of the present invention, the code embedded in the printed document is extracted, and the image corresponding to the extracted code registered in the image code storage unit is displayed on a designated display unit, making it possible to authenticate by visual comparison of the actual printed document and the displayed image data of the printed document to determine if they match. Thus, authentication can be carried out appropriately according to requirement.

According to still another aspect of the present invention, a retaining unit containing an authentic code in an authentic code storage unit is further provided. The code embedded in the printed document is extracted and if the extracted code does not match with the authentic code stored in the authentic code storage unit, the image imprinted in the printed document is certified as a counterfeit. Consequently, the preset code can be changed at will, making it possible to perform a more appropriate authentication.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An image authentication system comprising:
a printing unit (10) that prepares a code in a form of an image of a different density in any two adjacent blocks, and prints the code onto a recording medium as a printed image;
a storage unit (20) that stores therein image data corresponding to printed images and codes to be embedded in image data corresponding to the printed images in a correlated manner; and
an authenticating unit (30) that receives scanned image data corresponding to a printed image, extracts a code embedded in the scanned image data and authenticates the printed image corresponding to the scanned image data based on extracted code.

2. The image authentication system according to claim 1, wherein
the printing unit (10) prints only the code onto the recording medium (16), and
the storing unit (20) stores therein the code and image data that is to be printed onto the recording medium along with the code in a correlated manner.

3. The image authentication system according to claim 1, wherein
the printing unit (10) embeds the code in image data to thereby obtain code-embedded image data and prints the code-embedded image data onto the recording medium, and
the storage unit (20) stores therein the code and the image data in a correlated manner.

4. The image authentication system according to claim 1, further comprising a displaying unit (32d) that retrieves image data corresponding to the extracted code from the storage unit (20) and displays retrieved image data.

5. The image authentication system according to claim 1, wherein if no code can be extracted from the scanned image data, the authenticating unit (30) certifies the printed image corresponding to the scanned image data as counterfeit.

6. The image authentication system according to claim 1, further comprising an authentic-code storage unit that stores therein authentic codes, wherein
the authenticating unit certifies the printed image corresponding to the scanned image data as counterfeit if the extracted code does not match with the authentic codes present in the authentic-code storage unit.

7. A printed image printed by the printing unit of the image authentication system according to claim 1.

8. An image authentication method comprising:
preparing a code in a form of an image of a different density in any two adjacent blocks;
printing prepared code onto a recording medium as a printed image;
storing image data corresponding to printed images and codes to be embedded in image data corresponding to the printed images in a correlated manner in a storage unit; and
receiving scanned image data corresponding to a printed image;
extracting a code embedded in the scanned image data; and
authenticating the printed image corresponding to the scanned image data based on extracted code.

9. A computer-readable recording medium that stores therein a computer program that causes a computer to execute:
preparing a code in a form of an image of a different density in any two adjacent blocks;
printing prepared code onto a recording medium as a printed image;
storing image data corresponding to printed images and codes to be embedded in image data corresponding to the printed images in a correlated manner in a storage unit; and
receiving scanned image data corresponding to a printed image;
extracting a code embedded in the scanned image data; and
authenticating the printed image corresponding to the scanned image data based on extracted code.
